# EUROPEAN PATENT SPECIFICATION

(11) **EP 4 030 105 B1**
(45) Date of publication and mention of the grant of the patent: **29.05.2024**
(21) Application number: 21217538.4
(22) Date of filing: 23.12.2021
(51) Int. Cl.: F24C 15/20, F24C 15/32, B64D 11/04

(54) **AIRCRAFT OVEN WITH A HYDROPHOBIC FILTER IN OVEN AIR OUTLET**
FLUGZEUGOFEN MIT HYDROPHOBEM FILTER IM LUFTAUSLASS DES OFENS
FOUR D'AVION AVEC UN FILTRE HYDROPHOBE DANS UNE SORTIE D'AIR DU FOUR

(30) Priority: 28.12.2020 US 202017135264
(43) Date of publication of application: 20.07.2022
(73) Proprietor: Koninklijke Fabriek Inventum B.V., 3439 MC Nieuwegein (NL)
(72) Inventor: HUIJSING, Hans, 3404 KD IJsselstein (NL); RAMAN, Varun, 2514KT Den Haag (NL)
(74) Representative: Dehns

(56) References cited:
- WO-A1-2004/104483
- CN-A- 111 956 056
- CN-U- 208 876 051
- DE-A1-102017 216 744

## Description

### BACKGROUND

### 1. Field

The present disclosure relates to aircraft ovens, and more particularly to air outlet filters in aircraft ovens.

### 2. Description of Related Art

Modem ovens, e.g. such as those used in aircraft galleys, have a condenser on the outlet of the oven to capture moisture from the exhaust air. The principle of a condenser is too cool down the exhaust air, so that the humidity in the air condenses to water, which can then be captured or recycled. The condensers used in modern ovens have poor efficiency to capture moisture, which if left unchecked can result in excessive moisture in the galley monument and effectively resulting in fungus growth.

The conventional techniques have been considered satisfactory for their intended purpose. However, there is an ever present need for improved systems and methods for more effective moisture capture in an oven air outlet. This disclosure provides a solution for this need. CN 111 956 056 A describes a water vapour separation mechanism. DE 10 2017 216744 A1 describes a method of removing moisture from air. WO 2004/104483 A1 describes an oven and its combination with a steam module. CN 208 876 051 U discloses a steam cooking oven comprising a steam generator communicating with a cooking cavity through an inlet pipe. The end of the inlet pipe comprises a non-woven filter net which intercepts liquid water from the water vapour coming from the steam generator.

### SUMMARY

An oven is defined in claim 1 and comprises a cooking volume and a fluid inlet in fluid communication with the cooking volume for ingress of fluid into the cooking volume. The oven also comprises an outlet conduit in fluid communication with the cooking volume for egress of fluid from the cooking volume. The oven further includes a hydrophobic filter in the outlet conduit configured to capture moisture from a flow of fluid egressing from the cooking volume.

The hydrophobic filter includes a fabric filter element of a hydrophobic material within a filter housing defining a filtration flow path therethrough. There can be no condenser in the outlet conduit. The hydrophobic filter can be configured to allow passage of fluid therethrough to an outlet of the outlet conduit, and to separate liquid water from the gas to a liquid water drain in fluid communication with the hydrophobic filter. The hydrophobic filter can also include a filter housing defined along a longitudinal axis oriented vertically. The filter housing can include PTFE.

A drain can connect to a bottom portion of the filter housing for gravity driven flow of liquid water out of the filter housing. The drain can include a drain conduit that outlets to a heated surface of the oven for evaporation of liquid water from the drain to ambient surroundings of the oven. A fluid source can operatively connect to supply fluid to the fluid inlet for steam cooking.

The oven may comprise a drain conduit comprising a conduit body with an inlet and an outlet with the hydrophobic filter between the conduit inlet and configured to capture moisture from a flow of fluid through the conduit body. The drain conduit can further include a recycle conduit in fluid communication with the cooking volume for recycled injection into the cooking volume.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic front perspective view of an embodiment of an oven constructed in accordance with the present disclosure, showing an oven in a galley monument;
Fig. 2 is a schematic front perspective view of the oven of Fig. 1 outside a galley monument;
Fig. 3 is a schematic box diagram of the oven of Figs. 1-2, showing a flow path through the hydrophobic filter system in accordance with at least one aspect of this disclosure.

### DETAILED DESCRIPTION

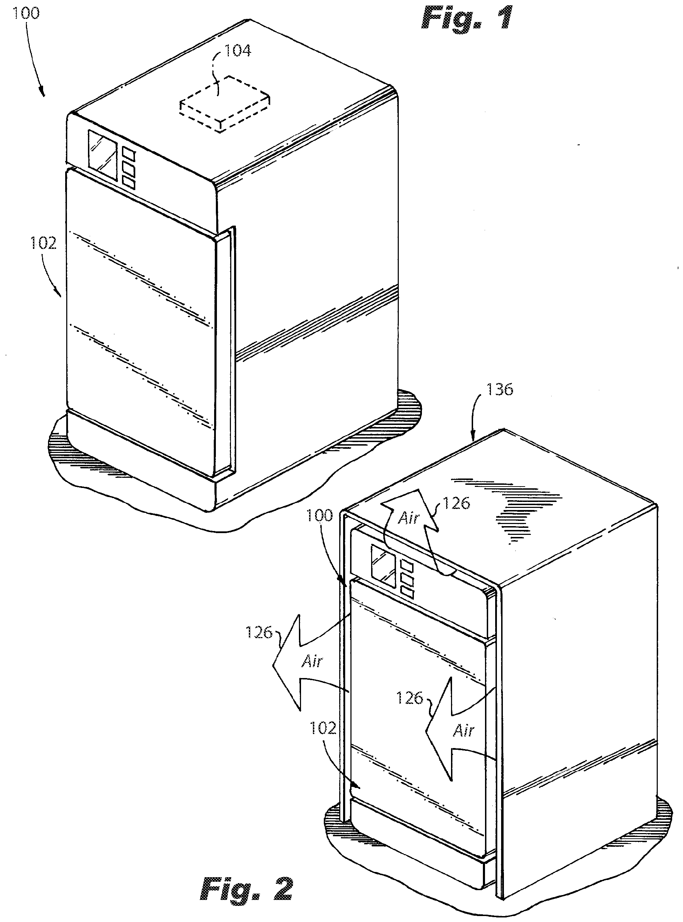

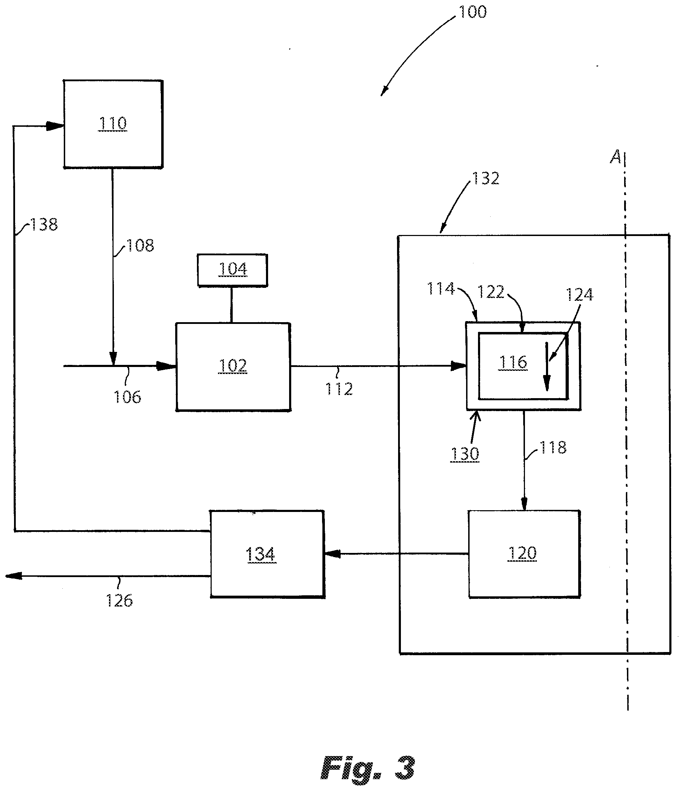

Reference will now be made to the drawings wherein like reference numerals identify similar structural features or aspects of the subject disclosure. For purposes of explanation and illustration, and not limitation, a partial view of an embodiment of an oven in accordance with the disclosure is shown in Fig. 1 and is designated generally by reference character 100. Other embodiments of systems in accordance with the disclosure, or aspects thereof, are provided in Figs. 2-3, as will be described. The systems and methods described herein can be used to improve moisture capture in an oven compartment.

Shown in Figs. 1 and 2, an oven 100 can include a cooking volume 102, where the cooking volume 102 can include at least one heating element 104 therein. In Fig. 1, the heating element 104 is shown in a top portion of the oven 100, however the heating element 104 can be mounted in a portion of the oven 100, or any suitable place within the oven 100. It is also possible that the oven 100 can have multiple heating elements 104, for example mounted in a top and bottom portion of the oven 100. The oven 100 can be included in a galley monument 136 as in Fig. 1, or can be a standalone oven 100 as in Fig. 2. Referring to Figs. 2-3, the oven 100 can include a fluid inlet 106 in fluid communication with the cooking volume 102 for ingress of fluid into the cooking volume 102. For example, the fluid inlet 106 can be in fluid communication with the cooking volume 102 and an external fluid source 110 via any suitable connection, such as conduit 108. The fluid source 110 can be operatively connected to the oven 100 to supply fluid (e.g. water) to the fluid inlet 106 for evaporation via heating element 104, and cooking within the cooking volume 102. The oven 100 can also include an outlet conduit 112 in fluid communication with the cooking volume 102 for egress of the evaporated fluid from the cooking volume 102.

The oven 100 can include a hydrophobic filter 114 disposed in the outlet conduit 112 to capture moisture from the flow of fluid egressing from the cooking volume 102 as it flows through the outlet conduit 112. The hydrophobic filter 114 can include a fabric filter element 116 of a hydrophobic material, for example, the fabric filter element can be any suitable material that includes microstructures for hydrophobicity. The hydrophobic fabric filter element 116 will allow passage of gas (e.g. air or exhaust from the cooking volume 102) to an outlet 118 of the outlet conduit 112. When the fluid is passed through the fabric filter element 116, the liquid water can be separated from the gas, so the liquid water can then pass to a liquid water drain 120 in fluid communication with the hydrophobic filter 114. The hydrophobic filter 114 can be disposed within a filter housing 122 that defines a filtration flow path therethrough, for example as represented by arrow 124. The filter housing 122 defined along a longitudinal axis A oriented vertically relative to the direction of gravity so that captured moisture can flow downward through the filter 114. In embodiments, the filter housing 122 can include polytetrafluoroethylene (PTFE), any other suitable hydrophobic, heat resistant polymer, and/or any combination thereof.

Because the fabric filter element 116 can improve the efficiency of liquid water separation, the system therefore can no longer require a condenser in the outlet conduit. For example, the oven 100 can include no condenser anywhere in the line between the cooking volume 102 and a gas outlet 118 where gas is released from the outlet conduit 112 into ambient surroundings 126 of the oven.

The liquid water drain 120 can connect to a bottom portion 130 of the filter housing 122 for collection and gravity driven flow of liquid water out of the filter housing 122. In some embodiments, the drain 120 can also include a drain conduit 132 that outlets to a heated surface of the oven 100 for evaporation of liquid water from the drain 120 to ambient surroundings 126 of the oven 100, for example, the ambient surroundings 126 can include within a galley monument 136, and/or surrounding atmosphere outside the galley monument 136. The heated surface 134 may be the heating element 104 within the cooking volume 102 so the condensate may be reused used for cooking, or the heated surface 134 may be any number of and/or a combination of heated components within the system 100. In embodiments, the drain 120 could also recycle the collected water from the drain 120 to the steam supply 110, e.g. through recycle conduit 138, to be used for further injection into the cooking volume 102.

The methods and systems of the present disclosure, as described above and shown in the drawings, provide for improved capture of remaining moisture from an oven, reducing the amount of ambient moisture that can build in galley monument, preventing mold and fungal growth within the galley monument. Additionally, the galley walls can only withstand temperatures to a certain limit. If exhaust temperatures increase, there will be an increase the galley wall temperatures. The systems as described herein therefore provide for a reduction in galley wall temperatures, which can provide additional benefits to the oven system as a whole, e.g. faster and improved cooking performance. While the apparatus and methods of the subject disclosure have been shown and described, those skilled in the art will readily appreciate that changes and/or modifications may be made thereto without departing from the scope of the subject disclosure.

## Claims

1. An aircraft oven (100) comprising:
a cooking volume (102);
a fluid inlet (106) in fluid communication with the cooking volume (102) for ingress of fluid into the cooking volume (102);
an outlet conduit (112) in fluid communication with the cooking volume (102) for egress of fluid from the cooking volume (102); and
a hydrophobic filter (114) in the outlet conduit (112) configured to capture moisture from a flow of fluid egressing from the cooking volume (102), and **characterized in that** the hydrophobic filter (114) includes a fabric filter element (116) of a hydrophobic material within a filter housing (122) defining a filtration flow path therethrough.

2. The oven as recited in claim 1, wherein there is no condenser in the outlet conduit (112).

3. The oven as recited in any preceding claim, wherein the hydrophobic filter (114) is configured to allow passage of fluid therethrough to an outlet of the outlet conduit (112), and to separate liquid water from the gas to a liquid water drain (120) in fluid communication with the hydrophobic filter (114).

4. The oven as recited in claim 3, wherein the hydrophobic filter (114) includes a filter housing (122) defined along a longitudinal axis oriented vertically, wherein the drain connects to a bottom portion (130) of the filter housing (122) for gravity driven flow of liquid water out of the filter housing.

5. The oven as recited in claim 4, wherein the drain includes a drain conduit (132) that outlets to a heated surface (134) of the oven for evaporation of liquid water from the drain to ambient surroundings (126) of the oven.

6. The oven as recited in claim 4, wherein the filter housing (122) includes PTFE.

7. The oven as recited in any preceding claim, further comprising a fluid source (110) operatively connected to supply fluid to the fluid inlet (106) for steam cooking.

8. The oven of claim 1, further comprising a drain conduit (132), the drain conduit comprising: a conduit body with an inlet and an outlet with the hydrophobic filter (114) between the conduit inlet and configured to capture moisture from a flow of fluid through the conduit body.

9. The oven as recited in claim 8, wherein there is no condenser in the outlet conduit (112).

10. The oven as recited in claim 8 or 9, wherein the hydrophobic filter (114) is configured to allow passage of fluid therethrough to the outlet of the outlet conduit (112), and to separate liquid water from the gas to a liquid water drain (120) in fluid communication with the hydrophobic filter (114).

11. The oven as recited in claim 10, wherein the hydrophobic filter (114) includes a filter housing (122) defined along a longitudinal axis oriented vertically, wherein the drain (120) connects to a bottom portion (130) of the filter housing for gravity driven flow of liquid water out of the filter housing.

12. The oven as recited in claim 11, wherein the drain (120) includes a drain conduit configured to outlet to a heated surface (134) of the oven for evaporation of liquid water from the drain to ambient surroundings of the oven.

13. The oven as recited in claim 12, wherein the filter housing includes PTFE.

14. The oven as recited in any of claims 8 to 12, further comprising a recycle conduit (138) in fluid communication with the cooking volume (102) for recycled injection into the cooking volume (102).

## Patentansprüche

1. Flugzeugofen (100), umfassend:
einen Garraum (102);
einen Fluideinlass (106), der in Fluidverbindung mit dem Garraum (102) steht, damit Fluid in den Garraum (102) eintreten kann;
eine Auslassleitung (112), die in Fluidverbindung mit dem Garraum (102) steht, damit Fluid aus dem Garraum (102) austreten kann; und
einen hydrophoben Filter (114) in der Auslassleitung (112), der dazu konfiguriert ist, Feuchtigkeit aus einem aus dem Garraum (102) austretenden Fluidstrom aufzufangen, und **dadurch gekennzeichnet, dass** der hydrophobe Filter (114) ein Gewebefilterelement (116) aus einem hydrophoben Material innerhalb eines Filtergehäuses (122) beinhaltet, das einen Filterungsstromweg durch dieses hindurch definiert.

2. Ofen nach Anspruch 1, wobei in der Auslassleitung (112) kein Kondensator vorhanden ist.

3. Ofen nach einem der vorhergehenden Ansprüche, wobei der hydrophobe Filter (114) dazu konfiguriert ist, den Durchgang von Fluid durch diesen hindurch zu einem Auslass der Auslassleitung (112) zu ermöglichen und flüssiges Wasser aus dem Gas zu einem Flüssigwasserabfluss (120) in Fluidverbindung mit dem hydrophoben Filter (114) abzuscheiden.

4. Ofen nach Anspruch 3, wobei der hydrophobe Filter (114) ein Filtergehäuse (122) beinhaltet, das entlang einer vertikal ausgerichteten Längsachse definiert ist, wobei der Abfluss für einen durch Schwerkraft angetriebenen Strom von flüssigem Wasser aus dem Filtergehäuse heraus mit einem Bodenabschnitt (130) des Filtergehäuses (122) verbunden ist.

5. Ofen nach Anspruch 4, wobei der Abfluss eine Abflussleitung (132) beinhaltet, die in einer beheizten Fläche (134) des Ofens mündet, um flüssiges Wasser aus dem Abfluss in die Umgebung (126) des Ofens zu verdampfen.

6. Ofen nach Anspruch 4, wobei das Filtergehäuse (122) PTFE beinhaltet.

7. Ofen nach einem der vorhergehenden Ansprüche, ferner umfassend eine Fluidquelle (110), die wirkverbunden ist, um dem Fluideinlass (106) Fluid zum Dampfgaren zuzuführen.

8. Ofen nach Anspruch 1, ferner umfassend eine Abflussleitung (132) umfasst, wobei die Abflussleitung Folgendes umfasst:
einen Leitungskörper mit einem Einlass und einem Auslass mit dem hydrophoben Filter (114) zwischen dem Leitungseinlass und dazu konfiguriert, Feuchtigkeit aus einem Fluidstrom durch den Leitungskörper aufzufangen.

9. Ofen nach Anspruch 8, wobei in der Auslassleitung (112) kein Kondensator vorhanden ist.

10. Ofen nach Anspruch 8 oder 9, wobei der hydrophobe Filter (114) dazu konfiguriert ist, den Durchgang von Fluid durch diesen hindurch zu einem Auslass der Auslassleitung (112) zu ermöglichen und flüssiges Wasser aus dem Gas zu einem Flüssigwasserabfluss (120) in Fluidverbindung mit dem hydrophoben Filter (114) abzuscheiden.

11. Ofen nach Anspruch 10, wobei der hydrophobe Filter (114) ein Filtergehäuse (122) beinhaltet, das entlang einer vertikal ausgerichteten Längsachse definiert ist, wobei der Abfluss (120) für einen durch Schwerkraft angetriebenen Strom von flüssigem Wasser aus dem Filtergehäuse heraus mit einem Bodenabschnitt (130) des Filtergehäuses verbunden ist.

12. Ofen nach Anspruch 11, wobei der Abfluss (120) eine Abflussleitung beinhaltet, die dazu konfiguriert ist, in einer beheizten Fläche (134) des Ofens zu münden, um flüssiges Wasser aus dem Abfluss in die Umgebung des Ofens zu verdampfen.

13. Ofen nach Anspruch 12, wobei das Filtergehäuse PTFE beinhaltet.

14. Ofen nach einem der Ansprüche 8 bis 12, ferner umfassend eine Rückführungsleitung (138), die für eine rückgeführte Einspritzung in den Garraum (102) in Fluidverbindung mit dem Garraum (102) steht.

## Revendications

1. Four d'aéronef (100), comprenant :
un volume de cuisson (102) ;
une entrée de fluide (106) en communication fluidique avec le volume de cuisson (102) pour l'entrée de fluide dans le volume de cuisson (102) ;
un conduit de sortie (112) en communication fluidique avec le volume de cuisson (102) pour la sortie de fluide du volume de cuisson (102) ; et
un filtre hydrophobe (114) dans le conduit de sortie (112) conçu pour capturer l'humidité d'un écoulement de fluide sortant du volume de cuisson (102), et **caractérisé en ce que** le filtre hydrophobe (114) comporte un élément filtrant en tissu (116) d'un matériau hydrophobe à l'intérieur d'un boîtier de filtre (122) définissant un chemin d'écoulement de filtration à travers celui-ci.

2. Four selon la revendication 1, dans lequel aucun condenseur n'est présent dans le conduit de sortie (112).

3. Four selon une quelconque revendication précédente, dans lequel le filtre hydrophobe (114) est conçu pour permettre le passage du fluide à travers lui vers une sortie du conduit de sortie (112), et pour séparer l'eau liquide du gaz vers un drain d'eau liquide (120) en communication fluidique avec le filtre hydrophobe (114).

4. Four selon la revendication 3, dans lequel le filtre hydrophobe (114) comporte un boîtier de filtre (122) défini le long d'un axe longitudinal orienté verticalement, dans lequel le drain se connecte à une partie inférieure (130) du boîtier de filtre (122) pour l'écoulement par gravité de l'eau liquide hors du boîtier de filtre.

5. Four selon la revendication 4, dans lequel le drain comporte un conduit de drainage (132) qui débouche sur une surface chauffée (134) du four pour l'évaporation de l'eau liquide du drain vers l'environnement ambiant (126) du four.

6. Four selon la revendication 4, dans lequel le boîtier de filtre (122) comporte du PTFE.

7. Four selon une quelconque revendication précédente, comprenant en outre une source de fluide (110) fonctionnellement connectée pour fournir du fluide à l'entrée de fluide (106) pour la cuisson à la vapeur.

8. Four selon la revendication 1, comprenant en outre un conduit de drainage (132), le conduit de drainage comprenant :
un corps de conduit doté d'une entrée et d'une sortie avec le filtre hydrophobe (114) entre l'entrée de conduit et conçu pour capturer l'humidité provenant d'un écoulement de fluide à travers le corps de conduit.

9. Four selon la revendication 8, dans lequel il n'y a pas de condenseur dans le conduit de sortie (112).

10. Four selon la revendication 8 ou la revendication 9, dans lequel le filtre hydrophobe (114) est conçu pour permettre le passage du fluide à travers lui vers une sortie du conduit de sortie (112), et pour séparer l'eau liquide du gaz vers un drain d'eau liquide (120) en communication fluidique avec le filtre hydrophobe (114).

11. Four selon la revendication 10, dans lequel le filtre hydrophobe (114) comporte un boîtier de filtre (122) défini le long d'un axe longitudinal orienté verticalement, dans lequel le drain (120) se connecte à une partie inférieure (130) du boîtier de filtre pour l'écoulement par gravité de l'eau liquide hors du boîtier de filtre.

12. Four selon la revendication 11, dans lequel le drain (120) comporte un conduit de drainage conçu pour déboucher sur une surface chauffée (134) du four pour l'évaporation de l'eau liquide du drain vers l'environnement ambiant du four.

13. Four selon la revendication 12, dans lequel le boîtier de filtre comporte du PTFE.

14. Four selon l'une quelconque des revendications 8 à 12, comprenant en outre un conduit de recyclage (138) en communication fluidique avec le volume de cuisson (102) pour une injection recyclée dans le volume de cuisson (102).
